# EUROPEAN PATENT APPLICATION

(11) **EP 2 574 766 A2**
(43) Date of publication of application: **03.04.2013**
(21) Application number: 12185762.7
(22) Date of filing: 24.09.2012
(51) Int. Cl.: F02K 1/76

(54) **VAFN actuation system with improved drive coupling and brake**

(30) Priority: 28.09.2011 US 201161540325 P; 28.09.2011 US 201161540318 P; 21.03.2012 US 201213426291
(71) Applicant: Honeywell International Inc., Morristown, NJ 07962-2245 (US)
(72) Inventor: Chakkera, Kevin K., Morristown, NJ 07962-2245 (US); Vaughn, Ron, Morristown, NJ 07962-2245 (US); McGill, Michael, Morristown, NJ 07962-2245 (US); Birn, Stephen, Morristown, NJ 07962-2245 (US)
(74) Representative: Houghton, Mark Phillip

(57) **Abstract**

An actuation system is provided for a variable area fan nozzle assembly of an aircraft. The actuation system includes a motor configured to generate a torque; a nozzle; and a drive coupling assembly coupled to the motor and the nozzle. The drive coupling assembly includes a first position in which the torque from the motor is transferred to the nozzle to translate the nozzle and a second position in which the torque from the motor is not transferred to the nozzle. The drive coupling assembly includes a first end portion and a second end portion, the first and second end portions mating with one another in the first position and disengaged from one another in the second position.

## Description

### CROSS-REFERENCE TO RELATED APPLICATION

This application claims the benefit of U.S. Provisional Application No. 61/540,325, filed September 28, 2011 and U.S. Provisional Application No. 61/540,318, filed September 28, 2011, the entirety of each being hereby incorporated by reference.

### TECHNICAL FIELD

The present invention relates to variable area fan nozzle assemblies and more particularly to actuation systems for variable area fan nozzle assemblies of jet engines.

### BACKGROUND

Conventional gas turbine engines generally include a fan section and a core engine with one or more compressors, a combustion section, and one or more turbines. The fan section and the core engine are disposed about a longitudinal axis and are enclosed within a case assembly. During operation, the fan section induces a first portion of air into the core engine and a second portion of air into a bypass flow path.

In the core engine, air is compressed, mixed with fuel, combusted, expanded through the turbines, and subsequently discharged from the core engine through an exhaust nozzle system. The bypass air is directed through the bypass flow path, disposed radially outward of the primary airflow path, and discharged through an annular fan exhaust nozzle system defined between a fan case and an inner cowl. A majority of thrust is produced by the pressurized fan air discharged through the fan exhaust nozzle, the remaining thrust being provided from the combustion gases discharged through the core exhaust nozzle.

The engine may include a thrust reverser system and a fan nozzle system to manipulate air flow through the bypass flow path. Thrust reversers function to enhance the braking of the aircraft during landing. When deployed, a thrust reverser redirects the rearward thrust via the bypass flow path of the jet engine to a forward or semi-forward direction to decelerate the aircraft upon landing. When in the stowed position, the thrust reversers are in a position that generally does not redirect the engine thrust.

The nozzle system may be positioned on or adjacent to the transcowls of a thrust reverser system. Some gas turbine engines have implemented variable area fan nozzles. The variable area fan nozzles provide a smaller fan exit nozzle diameter to optimize operation during certain conditions. However, existing variable area fan nozzles typically utilize relatively complex mechanisms that undesirably increase overall engine weight and decrease fuel efficiency.

Accordingly, it is desirable to provide improved variable area fan nozzles that, for example, reduce complexity, weight, and cost in a turbofan engine. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with an exemplary embodiment, an actuation system is provided for a variable area fan nozzle assembly of an aircraft. The actuation system includes a motor configured to generate a torque; a nozzle; and a drive coupling assembly coupled to the motor and the nozzle. The drive coupling assembly includes a first position in which the torque from the motor is transferred to the nozzle to translate the nozzle and a second position in which the torque from the motor is not transferred to the nozzle. The drive coupling assembly includes a first end portion and a second end portion, the first and second end portions mating with one another in the first position and disengaged from one another in the second position.

In accordance with another exemplary embodiment, a drive coupling assembly is provided for driving variable area fan nozzle with a motor of an aircraft. The assembly includes a first portion coupled to the motor; and a second portion coupled to the nozzle. The second portion has a first position engaging the first portion in which the torque from the motor is transferred to the nozzle to translate the nozzle and a second position decoupled from the first portion in which the torque from the motor is not transferred to the nozzle.

### BRIEF DESCRIPTION OF THE DRAWINGS

The present invention will hereinafter be described in conjunction with the following drawing figures, wherein like numerals denote like elements, and

FIG. 1 is a perspective view of an aircraft engine system according to an exemplary embodiment;

FIG. 2 is a schematic cross-sectional view of the engine system of FIG. 1 according to an exemplary embodiment;

FIG. 3 is a partial, more detailed cross-sectional view of the engine system of FIG. 2 with a transcowl and nozzle in a first position according to an exemplary embodiment;

FIG. 4 is a partial, more detailed cross-sectional view of the engine system of FIG. 2 with a transcowl in a second position according to an exemplary embodiment;

FIG. 5 is a partial, more detailed cross-sectional view of the engine system of FIG. 2 with a nozzle in a second position according to an exemplary embodiment;

FIG. 6 is a simplified functional schematic representation of an actuator system associated with the engine system of FIG. 2 according to an exemplary embodiment;

FIG. 7 is a cross-sectional view of a first portion of a drive coupling assembly of the actuator system of FIG. 6 according to an exemplary embodiment;

FIG. 8 is an end view of the first portion of the drive coupling assembly of FIG. 7 according to an exemplary embodiment;

FIG. 9 is a cross-sectional view of a second portion of a drive coupling assembly of the actuator system of FIG. 6 according to an exemplary embodiment;

FIG. 10 is an end view of the second portion of the drive coupling assembly of FIG. 9 according to an exemplary embodiment;

FIG. 11 is a partial, cross-sectional view of the drive coupling assembly of FIG. 9 in an unlocked position according to an exemplary embodiment; and

FIG. 12 is a cross-sectional view of a second portion of a drive coupling assembly of the actuator system of FIG. 6 according to an alternate exemplary embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

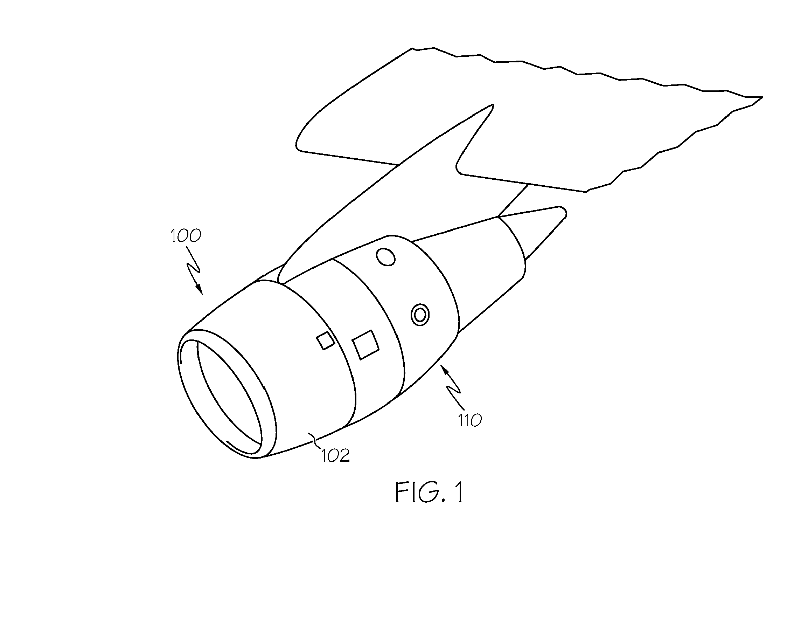

FIG. 1 is a perspective view of portions of an aircraft jet engine system 100 with a fan case 102. Typically, the fan case 102 encloses a turbofan engine, as described below, and mounts the engine for aircraft operation. As also discussed below, the engine system 100 may include a case assembly 110 to optimize operation.

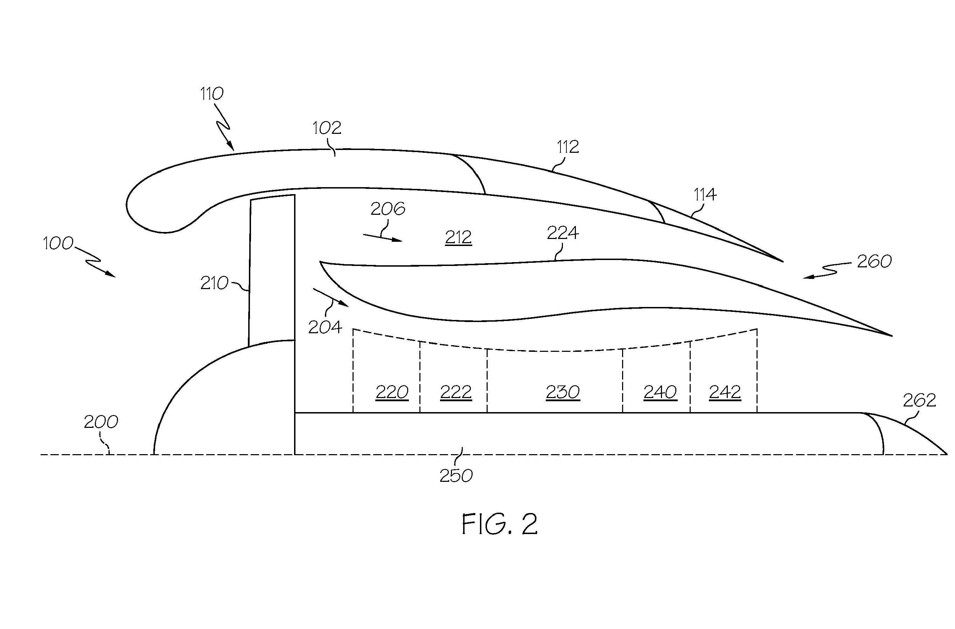

FIG. 2 is a schematic cross-sectional view of the engine system 100 of FIG. 1. The engine system 100 is circumferentially disposed about an engine centerline 200. The engine system 100 includes a fan 210, a low pressure compressor 220, a high pressure compressor 222, a combustion section 230, a high pressure turbine 240, and a low pressure turbine 242 arranged around an engine shaft 250. Typically, air is compressed in the compressors 220, 222, mixed with fuel and burned in the combustion section 230, and expanded in the turbines 240, 242. The turbines 240, 242 include rotors coupled for rotation with the engine shaft to drive the compressors 220, 222 and the fan 210 in response to the expansion of combustion gases.

In the example shown, the engine system 100 is a gas turbine bypass turbofan arrangement in which the diameter of the fan 210 is larger than that of the compressors 220, 222. As such, the case (or nacelle) 102 extends circumferentially about the fan 210 to define a bypass air flow path 212 extending between the case 102 and an inner cowl 224, which generally surrounds the compressors 220, 222, combustion section 230, and turbines 240, 242.

In operation, the fan 210 draws air into the engine system 100 as core flow 204 and into the bypass air flow path 212 as bypass air flow 206. A rear exhaust 260 discharges the bypass air flow 206 from the engine system 100, and the core flow 204 is discharged from a passage between the inner cowl 224 and a tail cone 262 to produce thrust.

As described in greater detail below, the case assembly 110 generally includes a thrust reverser actuation system (TRAS) 112 and a variable area fan nozzle (VAFN) system 114 to manipulate bypass air flow 206 in the flow path 212. In general, the TRAS 112 functions to selectively block the bypass air flow path 212 of the engine to provide braking to the aircraft, e.g., as redirected thrust. The VAFN system 114 functions to selectively adjust the flow area of the bypass air flow path 212 to optimize engine operation.

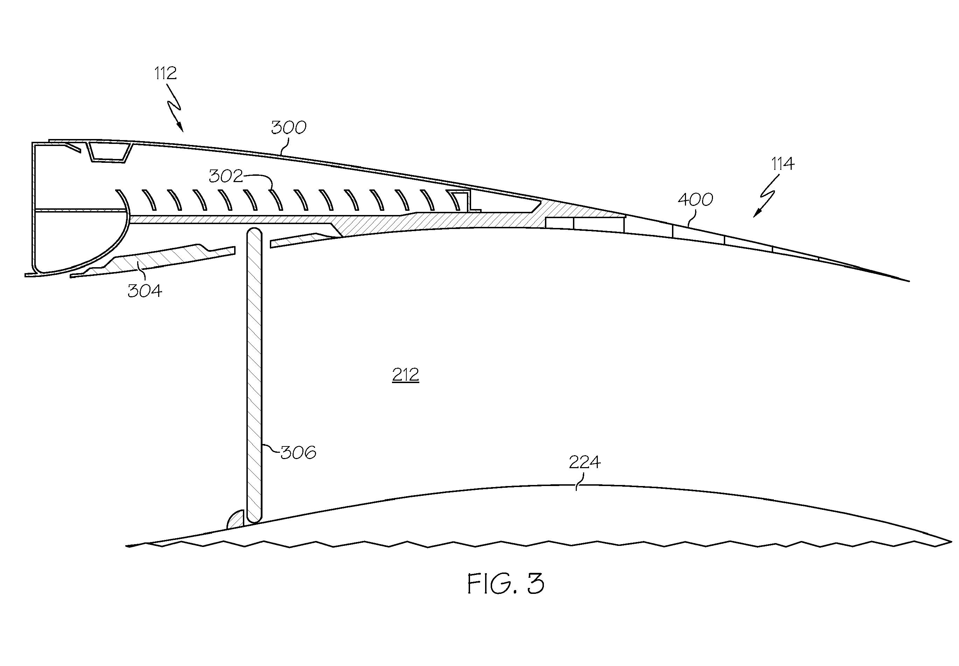

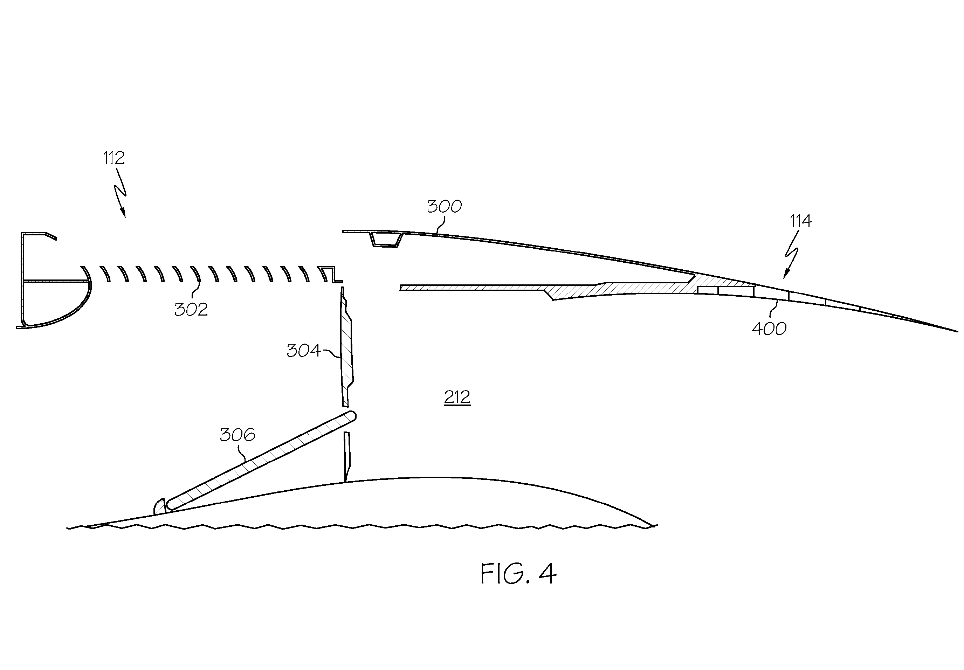

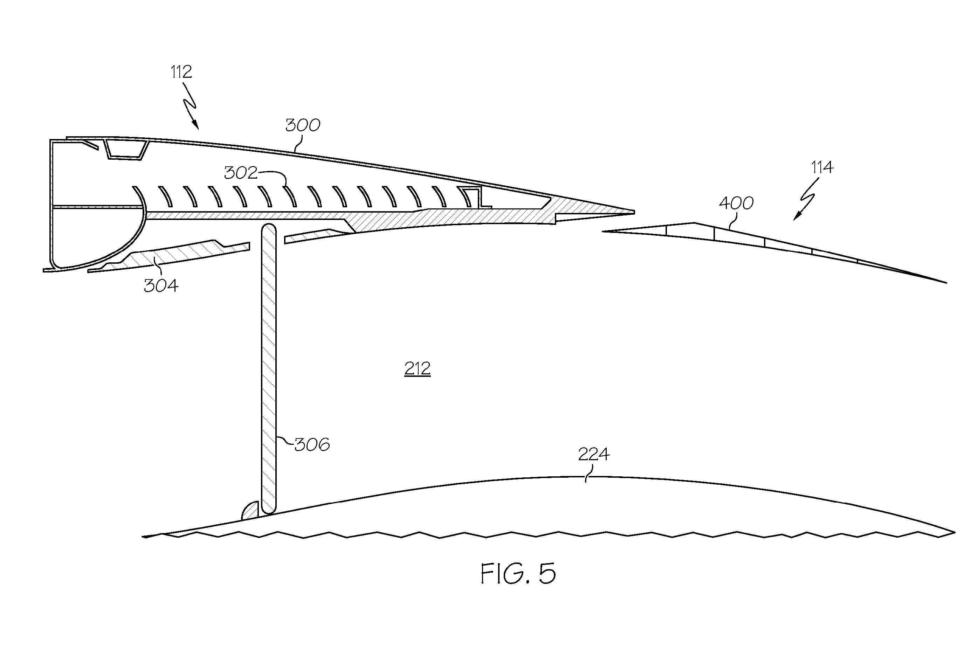

FIGS. 3-5 illustrate the operation of the TRAS 112 and VAFN system 114 relative to the bypass air flow path 212. In particular, FIG. 3 is a partial, more detailed cross-sectional view of the aircraft engine of FIG. 2 with the TRAS 112 and VAFN system 114 in a first position. FIG. 4 is a partial, more detailed cross-sectional view of the aircraft engine of FIG. 2 with the TRAS 112 in a second position, and FIG. 5 is a partial, more detailed cross-sectional view of the aircraft engine of FIG. 2 with the VAFN system 114 in a second position.

As is described in greater detail below, the TRAS 112 includes one or more semi-circular transcowls (or "reverser cowls") 300 that are positioned circumferentially on the outside of the jet engine fan case 102 (FIG. 1), typically on a fixed structure or torque box. In one exemplary embodiment, the TRAS 112 includes a pair of semi-circular transcowls 300 that extend around the case 102. The VAFN system 114 includes trailing edge fan nozzles 400 arranged at the downstream ends of the transcowls 300. Additional details about the operation and deployment of the transcowls 300 and nozzles 400 will be provided below with respect to FIGS. 3-5 prior to a more detailed description of the VAFN system 114.

As shown more particularly in FIG. 3, the transcowls 300 cover a plurality of vanes 302, which may be cascade-type vanes are positioned between the transcowls 300 and a bypass air flow path 212. When in the stowed position, as depicted in FIG. 3, the transcowls 300 are pressed against one or more stow seals, which keep air in the bypass air flow path 212. The transcowls 300 are mechanically linked to a series of blocker doors 304 via a drag link 306. In the stowed position, the blocker doors 304 form a portion of an outer wall and are therefore oriented parallel to the bypass air flow path 212.

However, as is shown in FIG. 4, when the TRAS 112 is commanded to deploy, the transcowls 300 are translated aft, causing the blocker doors 304 to rotate into a deployed position, such that the bypass air flow path 212 is blocked. This also causes the vanes 302 to be exposed and the bypass air flow to be redirected out the vanes 302. The redirection of the bypass air flow in a forward direction creates a reverse thrust and thus works to slow the airplane.

Now referring FIG. 5, which depicts the TRAS 112 in the stowed position, the VAFN system 114 may selectively adjust the nozzles 400 mounted on the trailing edges of the transcowls 300 to optimize the engine performance under different flight conditions. The nozzles 400 may be nozzle-like annular airfoil structures selectively translated (i.e., moved fore and aft) to vary the fan nozzle's exit area and to adjust an amount of engine bypass flow. As compared to FIG. 3, the nozzles 400 in FIG. 5 have been translated aft. Any number of nozzles 400 may be provided, although in one exemplary embodiment, two nozzles 400 are provided.

As such, the transcowls 300 and nozzles 400 are selectively translated with one or more actuation systems. In one exemplary embodiment, the nozzles 400 are only operated when the transcowl 300 is in the stowed position. In other words, the nozzles 400 are not operated when the aircraft is landing in this exemplary embodiment. As described in greater detail below, the actuation system of the VAFN system 114 functions to prevent movement of the nozzles 400 when the TRAS 112 is deployed.

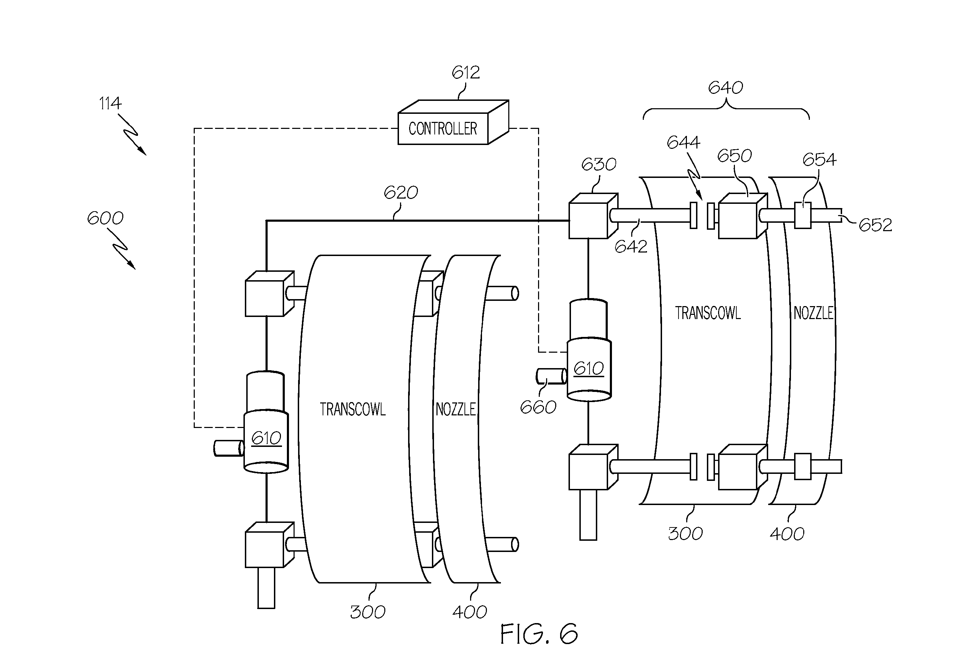

FIG. 6 is a simplified functional schematic representation of an actuation system 600 of the VAFN system 114 according to an exemplary embodiment. The actuation system 600 modulates the variable area fan nozzle effective flow area by moving the vane airfoil position from 0% to 100% of stroke. As noted above, the case assembly 110 (FIG. 1) includes a fixed torque box (not shown) and translating thrust reverser transcowls 300. Referring briefly to the TRAS 112 (FIGS. 3-5), the semi-circular transcowls 300 may operate on sliders on upper and lower beams, and as described below, at least a portion of the VAFN system 114 may be mounted on the transcowls 300.

The actuation system 600 includes one or more power drive units (PDUs) 610. Each PDU 610 is an integrated rotor, brake, and optionally, a gearbox. The motors are coupled to a controller that receives signals from a controller 612, such as a FADEC. Flexible drive shafts 620 drive the gearboxes 630 mounted to the fixed structure (e.g., a stationary torque box). The gearboxes 630 may be, for example, bevel set gearboxes.

The torque from the PDUs 610 actuates the nozzles 400 via the drive shafts 620 and gearboxes 630, and this torque may be further transferred with drive coupling assemblies 640. One drive coupling assembly 640 will be described, although more than one drive coupling assembly 640 may be provided. In the exemplary embodiment of FIG. 6, four drive coupling assemblies 640 are depicted such that a first pair of drive coupling assemblies 640 coordinate to drive one of the nozzles 400 and a second pair of drive coupling assemblies 640 coordinate to drive the other nozzle 400. Any suitable arrangement may be provided.

Each drive coupling assembly 640 includes first drive shaft 642, a selectively disengageable drive coupling 644, a nozzle actuator 650, a second drive shaft 652, and gimbal 654. A more detailed description of the drive coupling assembly 640 is provided below after a general description of the operation.

The first drive shaft 642 extends from the fixed structure gearbox 630 and may be selectively rotated at the first structure gearbox 630. The first drive shaft 642 is configured to rotationally engage the second drive shaft 652 at the drive coupling 644, as discussed in greater below. As such, when engaged, the second drive shaft 652 rotates with the first drive shaft 642.

The second drive shaft 652 extends through and is coupled to the nozzle actuator 650, which is mounted on the transcowl 300. As a result of this arrangement, the gearbox 630 and nozzle actuator 650 move relative to one another in a longitudinal direction as the transcowl 300 is stowed and retracted. In other words, the drive coupling 644 engages and disengages the first and second drive shafts 642, 652 based on the position of the transcowl 300. In the view of FIG. 6, the drive coupling 640 is disengaged, thus preventing the first drive shaft 642 from transferring torque to the second drive shaft 652. Although not shown in FIG. 6, the nozzle actuator 650 further includes a brake mechanism to prevent rotation of the second drive shaft 652 when the drive coupling 644 is disengaged.

The nozzle actuator 650 is typically a ballscrew actuator such that the second drive shaft 652 translates forward and aft when rotated. The second drive shaft 652 extends to the gimbal 654, which is mounted on the nozzle 400. As the second drive shaft 652 translates, it also translates the gimbal 654 and thus the nozzle 400. As such, the nozzle 400 is actuated back and forth by the translating drive shaft 652. Accordingly, the torque from the PDUs 610 may be transferred to linear movement of the nozzle 400 when the drive coupling 644 is engaged. Additionally, a manual drive unit 660 mounts to each PDU 610 and mates with gearshaft 620 allowing for manual extension and retraction of the nozzles 400.

Since the nozzle actuator 650 only actuates the nozzle 400 when the drive coupling 644 is engaged, the nozzles 400 may only operate when the thrust reverser transcowls 300 are stowed and locked (e.g., when the transcowls are in a position such that the drive coupling 644 engages). At that time, the drive coupling 644 engages the gearbox on the fixed torque box to the nozzle actuator 650 and simultaneously unlocks the drive coupling assembly 640 to enable fan nozzle operation during takeoff, cruise, and prior to landing and reverser operation. When the aircraft lands and the thrust reverser transcowls 300 are commanded to deploy, the drive coupling 644 disengages and the drive coupling assembly 640 is locked. Additional details of the coupling/decoupling mechanism are discussed below.

Accordingly, in the exemplary embodiment shown in FIG. 6, the actuator system includes: two PDUs (integrated motor, brake & gearbox located at 3 and 9 o'clock); one controller; four gearboxes mounted on fixed structure; four ball screw actuators mounted on transcowl; two nozzle position indicators (RVDT/LVDT); five flexible shafts; one or two Manual Drive Units; Electrical Harnesses; and four drive couplings engaged only when transcowl is stowed. Any suitable arrangement may be provided. For example, in another exemplary embodiment 6, the actuator system includes: one PDU (integrated motor, brake & gearbox located at 3, 9 or 12 o'clock); one controller; four gearboxes mounted on fixed structure; four ballscrew actuators mounted on transcowl; two nozzle position indicators (RVDT/LVDT); four flexible shafts; one Manual Drive Unit; Electrical Harnesses; and four drive couplings engaged only when transcowl is stowed. The actuators described herein may be electrical, mechanical, pneumatic, hydraulic, or the like, and can be interconnected by appropriate power cables and conduits (not shown).

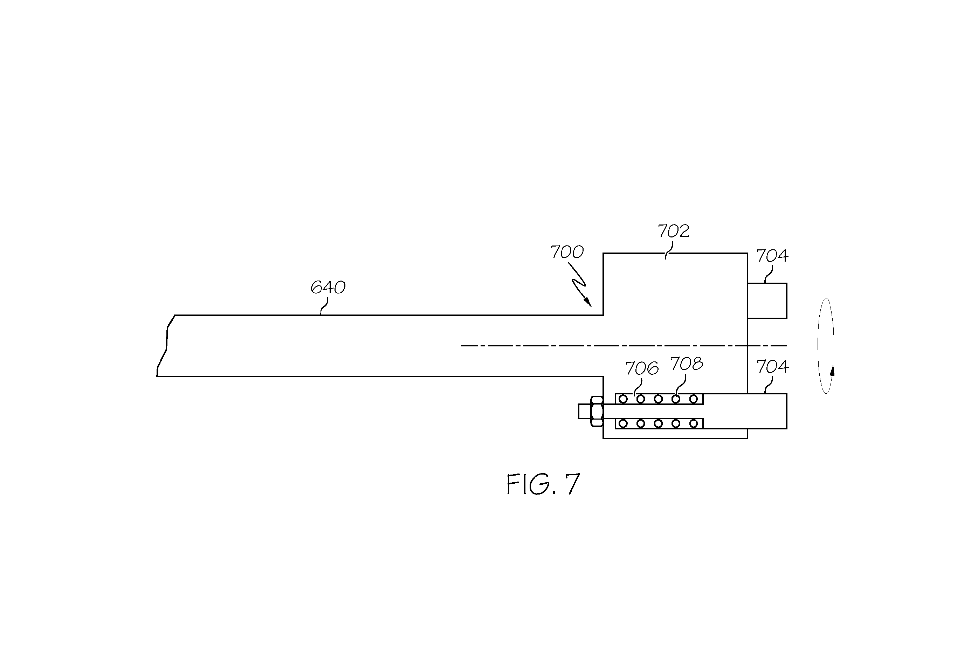

As described above, the actuator system 600 only enables driving of the nozzles 400 when the transcowls 300 are stowed. In particular, FIGS. 7-9 illustrate portions of the drive coupling assembly 640 that enable this function.

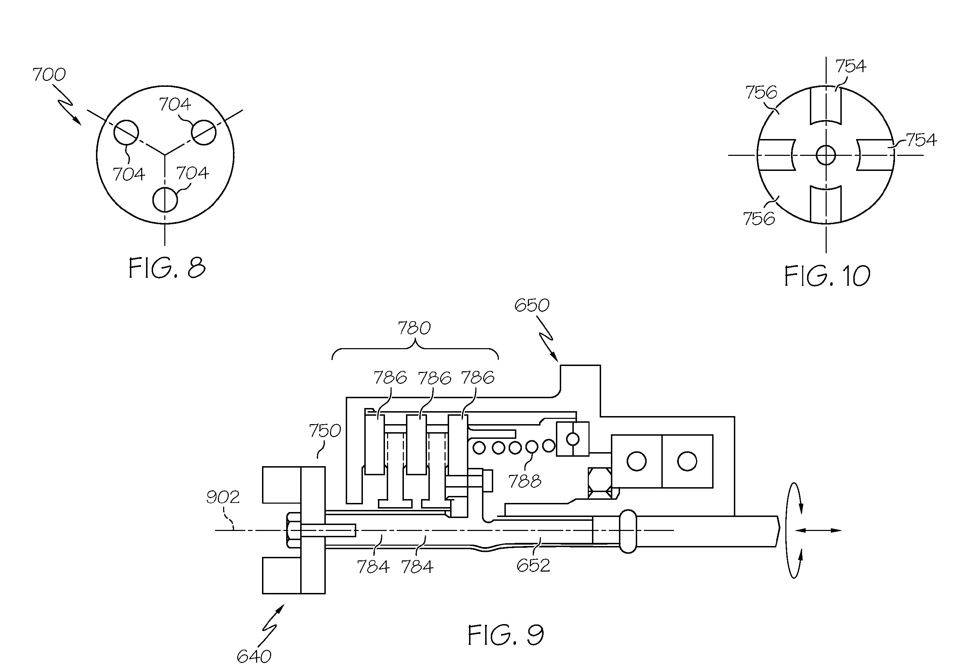

FIG. 7 is a cross-sectional view of an end portion 700 of the first drive shaft 642 of the drive coupling assembly 640 that extends from the fixed structure gearbox 630 (FIG. 6). FIG. 8 is an end or side view of the end portion 700 of the first drive shaft 642. The end portion 700 of the first drive shaft 642 has a generally cylindrical end with one or more pins 704. The pins 704 are spring loaded in recesses 706 within the end portion 700 such that the pins 704 are biased outward by the springs 708 and may retract into the recesses 706. As noted above, during operation, the first drive shaft 642 and end portion 700 are rotated.

FIG. 9 is a cross-sectional view of the second drive shaft 652 and nozzle actuator 650 of the drive coupling assembly 640. Although not shown, the nozzle actuator 650 is rotationally symmetric about centerline 902. As noted above, the second drive shaft 652 extends through the nozzle actuator 650 to the nozzle 400 (FIG. 6). FIG. 10 is an end or side view of the end portion 750 of the second drive shaft 652. The end portion 750 includes one or more tabs 754 that create gaps 756.

Referring initially to FIGS. 8 and 10, the end portions 700, 750 form the disengageable drive coupling 644. When engaged, the end portions 700, 750 transfer torque the drive the nozzles 400 (FIG. 6), and when disengaged, the end portions 700, 750 do not transfer torque to drive the nozzles 400.

In particular, when the end portion 700 of the first drive shaft 642 presses against the end portion 750 of the second drive shaft 652, one or more of the pins 704 are positioned within the gaps 756. In this condition, the portions 700, 750 are engaged or coupled such that the first portion 700 can rotationally drive the second portion 750. As described above, the end portions 700, 750 are typically engaged when the transcowls 300 (FIG. 6) are in a stowed position, and when the transcowl 300 is extended, the second drive shaft 652 is moved away from the first drive shaft 642 such that the end portions 700, 750 do not engage one another to transfer torque.

When the end portions 700, 750 are initially pressed together, e.g., when the transcowls 300 are transitioning from a deployed position to a stowed position, the one or more of the pins 704 of the first drive shaft 642 may encounter tabs 754 of the second drive shaft 652. Any such pin 704 may initially retract into the respective recess 706 until rotation of the first drive shaft 642 aligns the pin 704 with a gap 756 at which time the respective spring 708 biases the pin 704 out of the recess 706 and into the gap 756 to thus drivingly engage the end portions 700, 750.

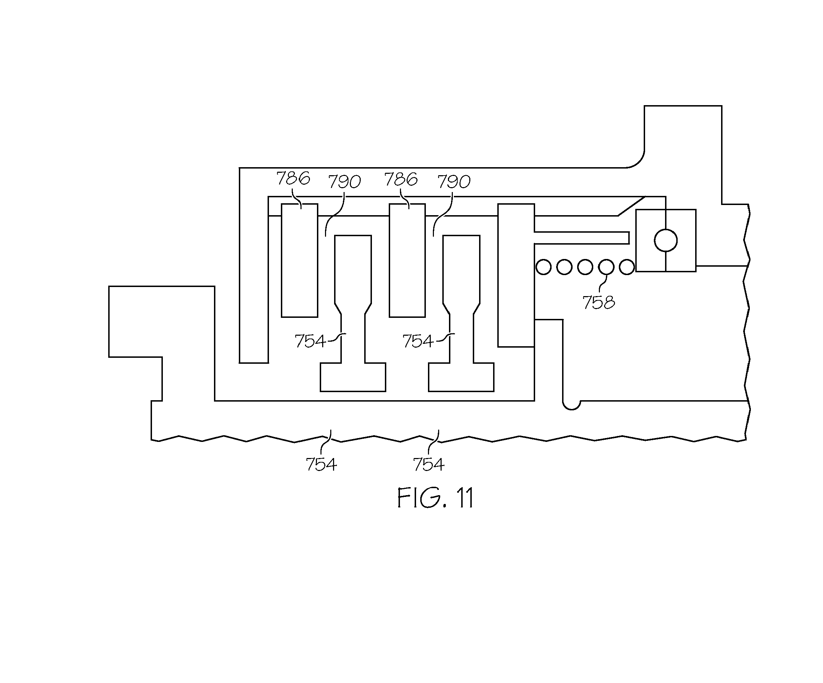

As particularly shown in FIG. 11, when the first drive shaft 642 is disengaged from the second drive shaft 652, it is advantageous if the nozzle actuator 650 is maintained in a fixed position. As such, the nozzle actuator 650 includes a brake assembly 780. Particularly, the second drive shaft 652 is splined with a number of rotors 784, which are interposed between a number of stators 786. The stators 786 are biased forward by a spring 758.

When the end portions 700, 750 are decoupled from one another, the spring 788 biases the stators 786 forward to frictionally engage the rotors 784, thus preventing the rotors 784 from rotating, as well as the second drive shaft 652 from movement. In effect, the brake assembly 780 is a disc brake during a disengaged scenario.

When the end portions 700, 750 are coupled to one another, the first end portion 700 pushes the second end portion 750 in an aft direction, which pushes the second drive shaft 652 against the spring 788 to disengage the stators 786 from the rotors 784 to create gaps 790 to thus enable relative movement between the stators 786 and the rotors 784, which in turn enables rotation of the second drive shaft 652. This arrangement is partially shown in FIG. 11, which is the schematic cross-sectional view of the nozzle actuator 650 when the end portions 700, 750 are engaged with one another. As shown, the coupling between the end portions 700 and 750 releases the brake assembly 780 to enable movement of the nozzle actuator 650, and thus, the nozzles 400.

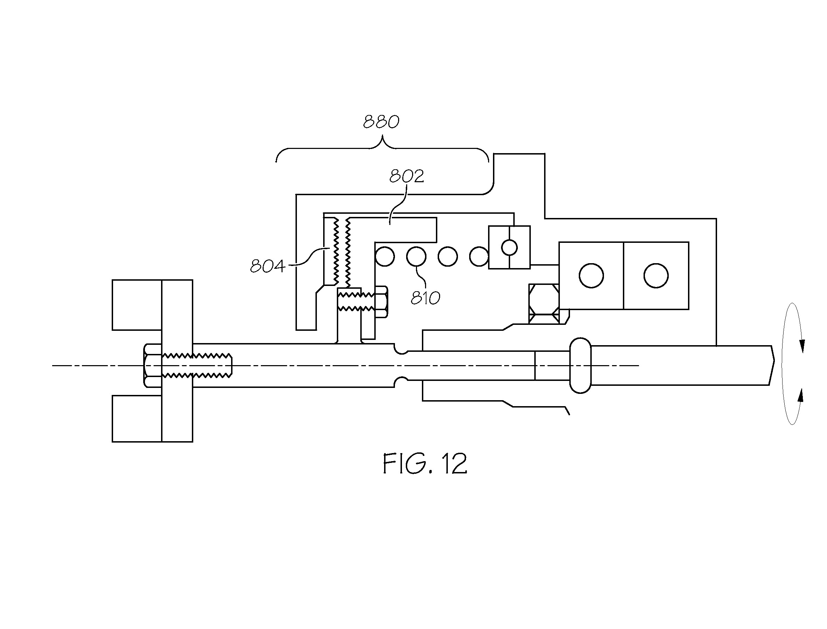

FIG. 12 is a more detailed view of portions of the actuator system in according to a second exemplary embodiment. In contrast to the brake assembly 780 of FIG. 10, the brake assembly 880 of FIG. 12 includes a first knurled end portion (or "poker chip") 802 that is spring biased with a spring 810 against a second knurled end portion (or "poker chip") 804 mounted on a stationary component. As such, when the end portions 802, 804 are disengaged, the spring 810 pushes the knurled end portions 802, 804 together to restrict movement. However, when the knurled end portions 802, 804 are engaged with one another, the aft movement of the first end portion 802 acts against the spring force to separate the knurled end portions 802, 804, thereby allowing rotation of the drive shaft and nozzle actuator. Other brake arrangements may be provided.

Accordingly, exemplary embodiments provide an engaging/disengaging drive coupling with synchronized actuator locking and unlocking feature. The coupling is disengaged during reverser translation. The coupling includes a plurality of pins on one half of the coupling that overlap tabs on the other half of the coupling to drive the actuator. The pins may be spring loaded such that the coupling engages even when a pin and tab initially align with one another. The number of pins and tabs will be such as to ensure engagement of at least one pin with at least one tab to drive the nozzle actuator. When the coupling halves contact, the actuator gearbox coupling half translates to unlock the locking mechanism by overcoming the spring. This allows the nozzle actuator to be driven by the torque box gear drive through the coupling. The lock mechanism may be any mechanical spring loaded locking mechanism. Examples include a disc brake locking device or a poker chip locking device. The lock mechanism has a splined sliding shaft attached to the coupling half at one end and to the stator of the disc brake (or half of the poker chip) at the other end. When the reverse cowl is stowed, the coupling half slides to unlock the locking mechanism. The overlap between the pins and the opposing tabs is sized to accommodate any nacelle and cowl tolerances and keeps the actuator in position even though the lock has disengaged. The fan nozzle is driven by actuators mounted on the translating reverser cowl structure. Accordingly, a simple, light weight, more reliable variable fan nozzle actuation system eliminates a gear box on the nozzle actuators and provides an engaging/disengaging drive coupling with synchronized actuator locking and unlocking features.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An actuation system (600) for a variable area fan (210) nozzle (400) assembly of an aircraft, the system (114) comprising:
a motor configured to generate a torque;
a nozzle (400); and
a drive coupling assembly (640) coupled to the motor and the nozzle (400), the drive coupling assembly (640) having a first position in which the torque from the motor is transferred to the nozzle (400) to translate the nozzle (400) and a second position in which the torque from the motor is not transferred to the nozzle (400),
wherein the drive coupling assembly (640) comprises a first end portion (700) and a second end portion (750), the first and second end portions (700) mating with one another in the first position and disengaged from one another in the second position.

2. The actuation system (600) of claim 1, wherein the drive coupling assembly (640) is mounted on a transcowl (300) such that the drive coupling is in the first position when the transcowl (300) is stowed and in the second position when the transcowl (300) is deployed.

3. The actuation system (600) of claim 2, wherein the drive coupling assembly (640) comprises
a first drive shaft (642) coupled to the first end portion (700);
a second drive shaft (652) coupled to the second end portion (750); and
a nozzle actuator (650) coupled to the second drive shaft (652) and mounted on the transcowl (300) such that deployment of the transcowl (300) moves the nozzle actuator (650) and the second drive shaft (652) away from the first drive shaft (642) such that the first and second end portion (750) disengage.

4. The actuation system (600) of claim 3, wherein the nozzle actuator (650) comprises a gimbal (654) that couples the second drive shaft (652) to the nozzle (400) such that rotation of the second drive shaft (652) translates the nozzle (400).

5. The actuation system (600) of claim 3, wherein the first end portion (700) includes a first end face with pins (704) extending therefrom.

6. The actuation system (600) of claim 5, wherein the second end portion (750) includes a second end face with tabs (754) extending therefrom that define gaps (756) between adjacent tabs (754).

7. The actuation system (600) of claim 6, wherein, in the first position, the pins (704) of the first end portion (700) extend into the gaps (756) to engage the tabs (754) of the second end portion (750) to transfer torque between the first drive shaft (642) and the second drive shaft (652).

8. The actuation system (600) of claim 7, wherein the first end portion (700) further includes recesses (706) to house the pins (704) in a retracted position and springs (708) to bias the pins (704) into an extended position.

9. The actuation system (600) of claim 8, each of the pins (704) is configured to retract into the retracted position upon initial engagement with one of the tabs (754) until rotation of the first drive shaft (642) aligns each of the pins (704) with the gap (756) to enable extension of each of the pins (704) into the gap (756).

10. The actuation system (600) of claim 3, wherein the nozzle actuator (650) includes a brake assembly (780) to prevent rotation of the second drive shaft (652) when the drive coupling assembly (640) is in the second position,
wherein the brake assembly (780) includes
a rotor (784) mounted on the second drive shaft (652),
a stator mounted proximate to the rotor, and
a spring (708) that biases the stator against the rotor (784) with a spring force to prevent rotation of the second drive shaft (652) when the drive coupling assembly (640) is in the second position.
